# EUROPÄISCHE PATENTSCHRIFT

(11) **EP 0 448 817 B1**
(45) Veröffentlichungstag und Bekanntmachung des Hinweises auf die Patenterteilung: **28.06.1995**
(21) Anmeldenummer: 90124704.9
(22) Anmeldetag: 19.12.1990
(51) Int. Cl.: G01N 27/409

(54) **Schutzrohr für Sauerstoffsensoren**
Protective tube for oxygen sensors
Tube protecteur pour capteurs d'oxygène

(30) Priorität: 28.03.1990 DE 4009890
(43) Veröffentlichungstag der Anmeldung: 02.10.1991
(73) Patentinhaber: ROBERT BOSCH GMBH, 70442 Stuttgart (DE)
(72) Erfinder: Weyl, Helmut, Dipl.-Ing., W-7141 Schwieberdingen (DE)

(56) Entgegenhaltungen:
- EP-B- 0 187 785
- DE-A- 2 748 461
- US-A- 4 184 934
- US-A- 4 784 728
- US-A- 4 842 713

## Beschreibung

### Stand der Technik

Die Erfindung geht aus von einem Meßfühler für die Bestimmung des Sauerstoffgehaltes in Gasen nach der Gattung des Hauptanspruchs. Es sind schon derartige Meßfühler bekannt (EP-PS 0 187 785, DE-PS 25 40 030), die ein Schutzrohr aufweisen, welches den aus einem rohrartigen Metallgehäuse meßgasseits herausragenden Abschnitt eines Sensorelements beziehungsweise dessen Träger mit Abstand umgibt. Es ist dabei nicht erfindungswesentlich, nach welchem Meßprinzip die Sensorelemente arbeiten. Anwendbar ist die vorliegende Erfindung für Sensorelemente beziehungsweise deren Träger, die aus Keramik bestehen. Aufgabe des Schutzrohres eines solchen Meßfühlers ist insbesondere, daß sie die Meßgase nicht direkt auf die Sensorelemente beziehungsweise deren Träger auftreffen lassen. Das direkte Auftreffen der Meßgase und der in Meßgasen enthaltenen Partikel auf die Sensorelemente beziehungsweise deren Träger gefährdet diese Elemente infolge der aggressiven Heißgastemperaturwechsel und auch infolge mechanischer Beschädigung durch die im Meßgas enthaltenen Partikel.

Aus der DE-OS 27 48 461 ist ein Meßfühler mit einem einen meßgasseitigen Abschnitt eines Sensorelements umgebenden Schutzrohr bekannt, bei dem das Schutzrohr mindestens eine koaxial umlaufende, in den Innenraum des Schutzrohres weisende Sicke aufweist. Die Sicke dient dabei dazu, einen in das Innere des Schutzrohres eingesetzten und dem Sensorelement vorgeschalteten Katalysator im Schutzrohr zu fixieren.

### Vorteile der Erfindung

Der erfindungsgemäße Meßfühler mit den kennzeichnenden Merkmalen des Hauptanspruchs hat demgegenüber den Vorteil, daß infolge des erfindungsgemäßen Schutzrohres das im Auspuffrohr während des Warmlaufs der Brennkraftmaschine entstehende Kondenswasser, welches aus den Verbrennungsprodukten entsteht, nicht zu dem erhitzten Sensorelement bzw. dessen Träger gelangt; aufgrund der Erfindung wird die Betriebssicherheit und die Lebensdauer derartiger Meßfühler erheblich verbessert. Dieser Vorteil gilt ganz besonders für solche Meßfühler, deren Sensorelemente bzw. deren Träger mittels eines innerhalb des Meßfühlers integrierten elektrischen Heizelementes beheizt werden.

Bei dem besonders wirkungsvollen Ausführungsbeispiel der Erfindung ist der Durchmesser des Schutzrohres im Bereich seines meßgasseitigen Endabschnitts trichterförmig im Durchmesser reduziert. Bei einer weiteren vorteilhaften Ausgestaltung der Erfindung ist die meßgasseitige Öffnung mit einem feinmaschigen Metallgitter bedeckt, welches im Meßgasstrom verwirbelte Feuchtigkeitstropfen abfängt.

### Zeichnung

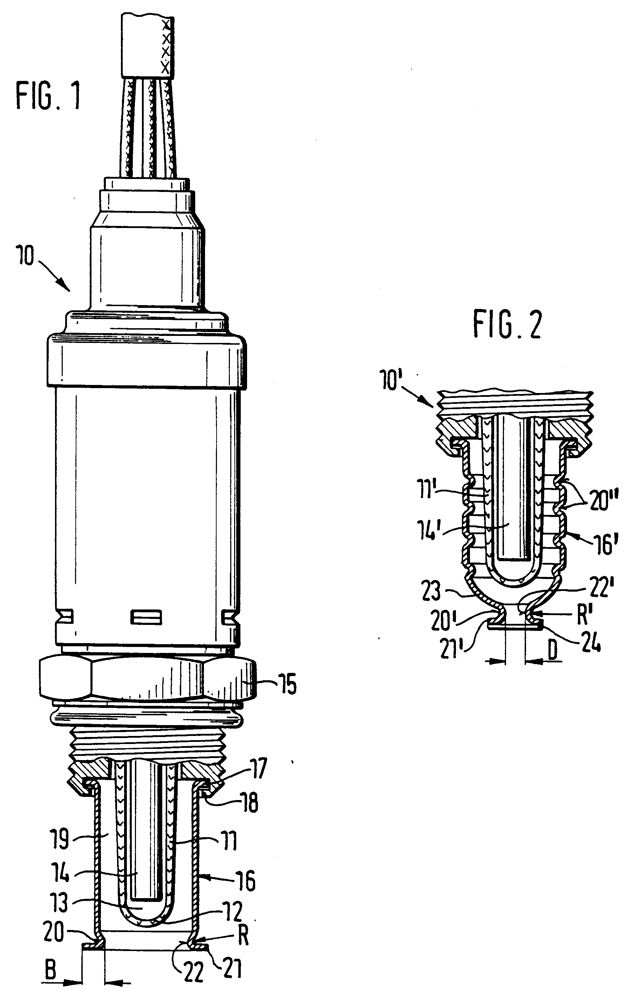

Ausführungsbeispiele der Erfindung sind in der Zeichnung dargestellt und in der nachfolgenden Beschreibung näher erläutert. Die Figur 1 zeigt eine Seitenansicht eines Meßfühlers in vergrößerter Darstellung, wobei der meßgasseitige Endabschnitt des Meßfühlers als Längsschnitt dargestellt ist, und Figur 2 den Längsschnitt durch eine andere Ausführungsform eines in vergrößerter Darstellung dargestellten meßgasseitigen Endabschnitts eines Meßfühlers gemäß der Erfindung.

### Beschreibung der Ausführungsbeispiele

Der in Figur 1 der Zeichnung dargestellte Meßfühler 10 für die Bestimmung des Sauerstoffgehaltes in Gasen ist insbesondere für die Verwendung in Abgasen von Brennkraftmaschinen, und zwar insbesondere zum Einbau in die Abgasleitung vorgesehen; der prinzipielle Aufbau eines solchen Meßfühlers 10, der im vorliegenden Ausführungsbeispiel nach dem bekannten Prinzip der Sauerstoffkonzentrationskette mit ionenleitendem Festelektrolyten funktioniert, ein Festelektrolytrohr 11 mit einem meßgasseitigem Boden 12 besitzt, im Innenraum 13 des Festelektrolytrohres 11 ein stabförmiges, elektrisches Heizelement 14 enthält, ist bereits aus der deutschen Gebrauchsmusterschrift 81 01 584 bekannt. Das Festelektrolytrohr 11, das auf seiner Außen- und Innenseite in der Figur nicht dargestellte, dünne Elektrodenschichten (z. B. aus Platin) und zum Teil auch Schutzschichten trägt, besteht aus Keramik. Anstelle dieses Sensorelementes können aber auch plättchenförmige Sensorelemente bzw. Sensorelement-Träger treten, welche ebenfalls aus Keramik bestehen bzw. keramische Bauelemente enthalten. Letztere Sensoren müssen aber nicht unbedingt nach dem obengenannen Prinzip der Sauerstoffkonzentrationskette mit ionenleitendem Festelektrolyten funktionieren, sie können auch einen anderen Wirkmechanismus haben, wie z. B. solche, deren elektrischer Widerstand sich bei unterschiedlichen Gasgehalten im Meßgas verändern (DE-PS 25 40 030), oder Sensoren, die ebenfalls einen ionenleitenden Festelektrolyten aufweisen und nach dem polarographischen Meßprinzip arbeiten (DE-OS 27 11 880). Die Erfindung ist also nicht vom System des Meßverfahrens abhängig, sondern bezieht sich auf derartige Meßfühler, bei denen keramische Bauteile den Meßgasen ausgesetzt sind.

Der meßgasseits aus dem Metallgehäuse 15 des Meßfühlers 10 herausragende Abschnitt des Festelektrolytrohres 11 ist von einem Schutzrohr 16 mit Abstand umgeben, das bevorzugt aus heißgaskorrosionsfestem Metall besteht. Dieses Schutzrohr 16 besitzt an seinem meßgasfernen Endabschnitt einen nach außen weisenden Flansch 17, welcher wellscheibenförmig ausgebildet und an der Stirnseite des Metallgehäuses 15 mittels eines Bördelrandes 18 befestigt ist; anstelle dieser Befestigungsart des Schutzrohres 16 am Metallgehäuse 15 sind auch andere bekannte Befestigungsverfahren möglich. Das Schutzrohr 16 hat üblicherweise eine Gesamtlänge von etwa 20 Millimeter, kann aber - je nach Anwendungsfall - zwischen 12 und 30 Millimeter, bevorzugt zwischen 18 und 25 Millimeter liegen. Der freie Endabschnitt des Schutzrohres 16 überragt dabei das Festelektrolytrohr 11 zumindest um 2 bis 3 Millimeter; um das Sensorelement des Meßfühlers 10 zu erreichen, muß das Meßgas also seine Strömungsrichtung um etwa 90° ändern. Gemäß der Erfindung trägt dieses Schutzrohr 16 direkt an seinem freien Endabschnitt eine koaxial umlaufende, in den Innenraum 19 des Schutzrohres 16 weisende Sicke 20, welche mit ihrem freien Endbereich 21 flanschartig vom Innenraum 19 des Schutzrohres 16 wegweist. Gemessen an der Außenseite des Schutzrohres 16 beträgt die Tiefe der Sicke 20 zwischen 0,5 und 3 Millimeter, wobei der am Grunde der Sicke 20 befindliche Radius R zwischen 0,5 und 3 Millimeter liegt. Bevorzugterweise hat der freie Endbereich 21 der Sicke 20 eine Breite B zwischen 1,5 und 5 Millimeter, welche von der Innenseite der meßgasseitigen Öffnung 22 des Schutzrohres 16 gemessen ist. Infolge dieser Gestaltung des Schutzrohres 16 wird das im Meßgas enthaltene Kondenswasser aus den Verbrennungsprodukten von der "Keramik" ferngehalten und verhindert diesbezügliche Schäden und Zerstörungen an den meßgasseitigen Keramikelementen.

In der Figur 2 der Zeichnung ist der meßgasseitige Endabschnitt eines Meßgasfühlers 10′, ebenfalls in vergrößertem Maßstabe dargestellt; obwohl in dieser Figur wiederum ein Festelektrolytrohr 11′ und ein stabförmiges elektrisches Heizelement 14′ dargestellt ist, könnte hier auch ein eingangs erwähntes anderes Sensorelement mit keramischen Bauteilen Verwendung finden.

Das Schutzrohr 16′ dieses Meßfühlers 10′ ist derart gestaltet, daß sich in seinem meßgasseitigen Längsabschnitt 23 sein Durchmesser in Richtung zur meßgasseitigen Öffnung 22′ hin trichterförmig reduziert und sein meßgasseitiger Endabschnitt wiederum eine Sicke 20′ besitzt, welche mit ihrem freien Endbereich 21′ von der meßgasseitigen Öffnung 22′ wegweist. Der ursprüngliche Durchmesser des Schutzrohres 16′ ist dabei so weit reduziert worden, so daß die meßgasseitige Öffnung 22′ einen lichten Durchmesser im Bereich zwischen 2 und 7 Millimeter hat; der bevorzugte, zumeist anwendbare Durchmesser D liegt etwa um 5 Millimeter. Der sich im Durchmesser reduzierende Längsabschnitt 23 des Schutzrohres 16′ hat sich dann am besten bewährt, wenn er ballig geformt ist. Das zu dem Ausführungsbeispiel gemäß Figur 1 über den Radius R der Sicke 20 und über die Bemessung des freien Endbereichs 21 der meßgasseitigen Sicke 20 Gesagte gilt entsprechend für die entsprechenden Elemente R′ und 21′ des Ausführungsbeispiels nach Figur 2.

Zur noch besseren Lösung der gestellten Aufgabe hat es sich erwiesen, wenn das Schutzrohr 16′ außer der Sicke 20′ auf seiner Länge mindestens noch zwei Sicken 20˝, besser noch vier Sicken 20˝ aufweist. Diese Sicken 20˝ können gleichmäßig über die Länge des Schutzrohres 16′ verteilt sein, sie können aber - je nach Anwendungsfall - auch unterschiedliche Abstände zueinander haben, gegebenenfalls auch nur im Bereich des meßgasseitigen Längsabschnitts 23 eingearbeitet worden sein, in welchem die Reduzierung des Durchmessers der Schutzhülse 16′ stattfindet. Das im Ausführungsbeispiel gemäß Figur 1 über den Radius R und die Tiefe der Sicke 20 Gesagte gilt entsprechend auch für diese Sicken 20˝.

Zur Optimierung der Wirkungsweise dieses Schutzrohres 16′, d. h. um auch im Meßgas wirbelnde Flüssigkeitströpfchen sicher von der Meßfühlerkeramik fernzuhalten, ist die meßgasseitige Öffnung 22′ mittels eines feinmaschigen Siebes 24 aus heißgaskorrosionsfestem Metall bedeckt worden. Dieses Sieb 24, das am freien Endbereich 21′ der Sicke 20′ z. B. durch Schweißen befestigt ist, kann aus einem Draht von 0,5 bis 1 Millimeter Durchmesser hergestellt sein und eine Maschenweite zwischen 0,2 und 0,8 Millimeter, bevorzugt um 0,4 Millimeter haben. Ein Schutzrohr 16′ stellt die optimale Ausführungsform gemäß der Erfindung dar.

## Patentansprüche

1. Meßfühler für die Bestimmung des Sauerstoffgehaltes in Gasen, insbesondere zum Einbau in die Abgasleitung von Brennkraftmaschinen, mit einem rohrförmigen Metallgehäuse (15), welches in seiner Längsbohrung zumindest teilweise einen Längsabschnitt eines im wesentlichen aus keramischem Material bestehenden Sensorelements (11) und/oder dessen im wesentlichen aus keramischem Material bestehenden Träger abdichtend umfaßt, wobei das Sensorelement (11) und/oder dessen Träger meßgasseits aus der Längsbohrung des Metallgehäuses (15) herausragt und in diesem Bereich mit Abstand von einem Schutzrohr (16, 16′) umgeben ist, dessen meßgasferner Endabschnitt (17) mit dem Metallgehäuse (15) fest und weitestgehend abgedichtet verbunden ist und dessen meßgasseitiges Ende das Sensorelement (11) und/oder dessen Träger überragt und offen und derart angeordnet ist, daß das zu messende Gas seine Strömungsrichtung um etwa 90° ablenken muß, um zum Sensorelement zu gelangen, wobei das Schutzrohr (16, 16′) mit mindestens einer koaxial umlaufenden, in den Innenraum (19) des Schutzrohrs (16, 16′) weisenden Sicke (20, 20′, 20˝) versehen ist, dadurch gekennzeichnet, daß eine Sicke (20, 20′) direkt am freien Endabschnitt des Schutzrohres (16, 16′) angeordnet ist und somit die Öffnung zum Innenraum umgibt, wobei die Sicke mit ihrem freien Endbereich (21, 21′) flanschartig vom Innenraum (19) wegweist, so daß im Meßgas enthaltenes Kondenswasser nicht zu dem erhitzten Sensorelement bzw. dessen Träger gelangt.

2. Meßfühler nach Anspruch 1, dadurch gekennzeichnet, daß der auf der Außenseite des Schutzrohres (10, 10′) gemessene Radius (R, R′) der mindestens einen Sicke (20, 20′) zwischen 0,5 und 3 Millimeter liegt.

3. Meßfühler nach Anspruch 1 oder 2, dadurch gekennzeichnet, daß der freie Endbereich (21, 21′) der im freien Endabschnitt des Schutzrohres (10, 10′) angeordneten Sicke (20, 20′) eine von der Innenseite der meßgasseitigen Öffnung (22, 22′) des Schutzrohres (10, 10′) gemessene Breite (B) zwischen 1,5 und 5 Millimeter hat.

4. Meßfühler nach einem der Ansprüche 1 bis 3, dadurch gekennzeichnet, daß das Schutzrohr (10′) einen sich zur meßgasseitigen Öffnung (22′) hin trichterförmig im Durchmesser reduzierenden Längsabschnitt (23) besitzt.

5. Meßfühler nach Anspruch 4, dadurch gekennzeichnet, daß der sich im Durchmesser reduzierende Längsabschnitt (23) des Schutzrohres (10′) ballig ausgebildet ist.

6. Meßfühler nach einem der Ansprüche 4 oder 5, dadurch gekennzeichnet, daß der lichte Durchmesser (D) der meßgasseitigen Öffnung (22′) zwischen 2 und 7 Millimeter, vorzugsweise um 5 Millimeter liegt.

7. Meßfühler nach einem der vorangehenden Ansprüche, dadurch gekennzeichnet, daß das Schutzrohr (10′) mehr als zwei Sicken (20′, 20˝) aufweist.

8. Meßfühler nach Anspruch 7, dadurch gekennzeichnet, daß die Sicken (20′, 20˝) unterschiedliche Abstände voneinander haben.

9. Meßfühler nach einem der vorangehenden Ansprüche, dadurch gekennzeichnet, daß die meßgasseitige Öffnung (22′) des Schutzrohres (10′) mittels eines Metallsiebes (24) bedeckt ist.

10. Meßfühler nach Anspruch 9, dadurch gekennzeichnet, daß das Sieb (24) eine Maschenweite zwischen 0,2 und 0,8 Millimeter, bevorzugt um 0,4 Millimeter hat.

## Claims

1. Measuring probe for determining the oxygen content in gases, in particular for installation in the exhaust conduit of internal combustion engines, having a tubular metal housing (15) which, in its longitudinal bore, at least partially surrounds in a sealing manner a longitudinal section of a sensor element (11) composed essentially of ceramic material and/or its carrier, which is composed essentially of ceramic material, the sensor element (11) and/or its carrier projecting from the longitudinal bore of the metal housing (15) at the measured-gas end and being surrounded in this area, with a clearance, by a protective tube (16, 16′), the end section (17) of which which is remote from the measured gas is connected firmly and, as far as possible, in a sealed manner to the metal housing (15) and the end of which which is at the measured-gas end projects beyond the sensor element (11) and/or its carrier and is open and arranged in such a way that the gas to be measured must change its direction of flow by approximately 90° in order to reach the sensor element, the protective tube (16, 16′) being provided with at least one coaxially encircling bead (20, 20′, 20˝) pointing into the interior (19) of the protective tube (16, 16′), characterized in that a bead (20, 20′) is arranged directly on the free end section of the protective tube (16, 16′) and thus surrounds the opening to the interior, the free end region (21, 21′) of the bead pointing away from the interior (19) in the manner of a flange, with the result that condensation water contained in the measured gas does not reach the heated sensor element or its carrier.

2. Measuring probe according to Claim 1, characterized in that the radius (R, R′) of the bead or beads (20, 20′), measured on the outside of the protective tube (10, 10′), is between 0.5 and 3 millimetres.

3. Measuring probe according to Claim 1 or 2, characterized in that the free end region (21, 21′) of the bead (20, 20′) arranged in the free end section of the protective tube (10, 10′) has a width (B) of between 1.5 and 5 millimetres, measured from the inside of the opening (22, 22′) of the protective tube (10, 10′) at the measured-gas end.

4. Measuring probe according to one of Claims 1 to 3, characterized in that the protective tube (10′) has a longitudinal section (23) which decreases in diameter in the form of a funnel towards the opening (22′) at the measured-gas end.

5. Measuring probe according to Claim 4, characterized in that the longitudinal section (23) of the protective tube (10′) which decreases in diameter is of convex design.

6. Measuring probe according to either of Claims 4 or 5, characterized in that the inside diameter (D) of the opening (22′) at the measured-gas end is between 2 and 7 millimetres, preferably about 5 millimetres.

7. Measuring probe according to one of the preceding claims, characterized in that the protective tube (10′) has more than two beads (20′, 20˝).

8. Measuring probe according to Claim 7, characterized in that the beads (20′, 20˝) are at different distances apart.

9. Measuring probe according to one of the preceding claims, characterized in that the opening (22′) at the measured-gas end of the protective tube (10′) is covered by means of a metal screen (24).

10. Measuring probe according to Claim 9, characterized in that the screen (24) has a mesh width of between 0.2 and 0.8 millimetres, preferably around 0.4 millimetres.

## Revendications

1. Capteur de mesure servant à déterminer la teneur en oxygène dans des gaz, destiné en particulier à être inséré dans la ligne d'échappement de moteurs à combustion interne, avec un boîtier métallique en forme de tube (15), ce capteur comprenant, dans son alésage longitudinal, de façon à assurer l'étanchéité, au moins en partie une section longitudinale d'un élément de capteur (11) réalisée essentiellement en un matériau céramique et/ou dont le support est réalisé essentiellement en un matériau céramique, l'élément de capteur (11) et/ou son support faisant saillie, du côté des gaz à mesurer, hors de l'alésage longitudinal du boîtier métallique (15) et étant entouré dans cette zone, à une certaine distance, par un tube de protection (16, 16′) dont la section terminale (17), éloignée des gaz à mesurer, est reliée de façon solidaire au boîtier métallique (15) en étant rendue le plus largement possible étanche, et dont l'extrémité, située du côté des gaz à mesurer, dépasse de l'élément de capteur (11) et/ou de son support en étant disposée d'une façon ouverte telle que le gaz à mesurer doive dévier son sens d'écoulement d'environ 90° pour arriver à l'élément de capteur, le tube de protection (16, 16′) étant pourvu d'au moins un bourrelet (20, 20′, 20˝) en faisant le tour de façon coaxiale, et tourné vers l'intérieur du tube de protection (16, 16′), capteur de mesure caractérisé en ce que l'on dispose un bourrelet (20, 20′) directement sur la section terminale libre du tube de protection (16, 16′) et l'on entoure ainsi l'ouverture de l'espace intérieur, le bourrelet s'écartant de l'intérieur (19), par sa zone terminale libre (21, 21′) à la manière d'une bride de telle façon que l'eau de condensation contenue dans les gaz à mesurer n'arrive pas sur l'élément de capteur chauffé ou sur son support.

2. Capteur de mesure selon la revendication 1 caractérisé en ce que le rayon (R, R′) ,mesuré du côté extérieur du tube de protection (10, 10′) d'au moins l'un des bourrelets (20, 20′), est compris entre 0,5 et 3 millimètres.

3. Capteur de mesure selon la revendication 1 ou 2, caractérisé en ce que la zone terminale libre (21, 21′) du bourrelet (20, 20′), disposée dans la section terminale du tube de protection (10, 10′), a une largeur (B), mesurée sur le côté intérieur de l'ouverture (22, 22′) située du côté des gaz à mesurer du tube de protection (10, 10′), qui est comprise entre 1,5 et 5 millimètres.

4. Capteur de mesure selon l'une des revendications 1 à 3, caractérisé en ce que le tube de protection (10′) possède une section longitudinale (23) dont le diamètre se réduit en forme d'entonnoir en direction de l'ouverture (22′) située du côté des gaz à mesurer.

5. Capteur de mesure selon la revendication 4, caractérisé en ce que la section longitudinale (23) du tube de protection (10′) dont le diamètre va en se réduisant, est constituée de façon bombée.

6. Capteur de mesure selon l'une des revendications 4 ou 5, caractérisé en ce que le diamètre d'ouverture (D) de l'ouverture (22′) située du côté des gaz à mesurer, est compris entre 2 et 7 millimètres, et est de préférence de 5 millimètres.

7. Capteur de mesure selon l'une des revendications précédentes, caractérisé en ce que le tube de protection (10′) présente plus de deux bourrelets (20, 20′).

8. Capteur de mesure selon la revendication 7, caractérisé en ce que les bourrelets (20′, 20˝) ont des écartements différents les uns par rapport aux autres.

9. Capteur de mesure selon l'une des revendications précédentes, caractérisé en ce que l'ouverture (22′), du tube de protection (10′) située du côté des gaz à mesurer est recouverte au moyen d'un tamis métallique (24).

10. Capteur de mesure selon la revendication 9, caractérisé en ce que le tamis (24) a une largeur de maille comprise entre 0,2 et 0,8 millimètre, de préférence de 0,4 millimètre.
